# EUROPÄISCHE PATENTSCHRIFT

(11) **EP 2 848 387 B1**
(45) Veröffentlichungstag und Bekanntmachung des Hinweises auf die Patenterteilung: **11.01.2017**
(21) Anmeldenummer: 14184710.3
(22) Anmeldetag: 15.09.2014
(51) Int. Cl.: B29C 49/06, B29C 49/12, B29C 49/28, B29C 49/36, B29C 49/42, B29C 49/46, B29C 49/58, B29K 105/00, B29L 31/00, F16K 31/163, F16K 3/24

(54) **BLASFORMMASCHINE MIT PNEUMATISCH BETÄTIGTEM BLASLUFTVENTIL UND VERFAHREN ZUM BETREIBEN EINER SOLCHEN BLASFORMMASCHINE**
BLOW MOLDING APPARATUS WITH A PNEUMATICALLY DRIVEN BLOW VALVE AND METHOD OF OPERATING SUCH AN APPARATUS.
MACHINE DE MOULAGE PAR SOUFFLAGE AVEC UNE VALVE DE SOUFFLAGE PNEUMATIQUE, ET MÉTHODE DE MISE EN OEUVRE D'UNE TELLE MACHINE.

(30) Priorität: 13.09.2013 DE 102013110088
(43) Veröffentlichungstag der Anmeldung: 18.03.2015
(73) Patentinhaber: Krones AG, 93073 Neutraubling (DE)
(72) Erfinder: Handschuh, Eduard, 93073 Neutraubling (DE); Geltinger, Florian, 93073 Neutraubling (DE); Winzinger, Frank, 93073 Neutraubling (DE)
(74) Vertreter: Bittner, Bernhard

(56) Entgegenhaltungen:
- EP-A1- 2 474 763
- EP-A2- 1 862 230
- US-A1- 2012 225 157

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt. Dabei werden üblicherweise erwärmte Kunststoffvorformlinge innerhalb von Blasformen durch die Beaufschlagung mit Blasdruck zu den Kunststoffbehältnissen umgeformt bzw. expandiert. Zu diesem Zweck wird an einer Mündung der Kunststoffvorformlinge eine Blasdüse angesetzt und diese Blasdüse beaufschlagt die Kunststoffvorformlinge mit einem gasförmigen Medium, beispielsweise mit Blasluft oder Sterilluft. Für die Herstellung bzw. Abfüllung bestimmter Getränke ist es erforderlich, dass diese Getränke in sterilisierte Behältnisse eingeführt werden. Üblicherweise werden zu diesem Zweck die bereits gefertigten beispielsweise blasformgeformten Behältnisse mit Sterilisationsmitteln sterilisiert.

In jüngerer Zeit ist man jedoch auch dazu übergegangen, bereits die Herstellung dieser Kunststoffbehältnisse, beispielsweise die Blasformung steril durchzuführen. Dies bedeutet, dass zum Expandieren der Kunststoffbehältnisse keine herkömmliche Blasluft sondern Sterilluft verwendet wird. Die Blasluftventile, welche diese Luftzufuhr steuern, sind dabei, jedenfalls, wenn es sich um pneumatisch betätigte Ventile handelt, relativ problematisch, da diese zu ihrer Arbeit auch mit Steuerluft betätigt werden und diese Steuerluft wiederum die sterile Blasformung verhindern könnte.

Beispielsweise ist aus der EP 2 474 763 A1 ein Blasventil bekannt, welches zum Verändern einer Funktionsgasdurchflussmenge in einem Funktionsgaskommunikationsweg dient. Zwischen zwei Aufnahmeräumen ist ein Dichtmittel angeordnet, welches aus einem ortsfesten und einen beweglichen Anteil besteht und einen Gasaustausch zwischen den Räumen verhindert.

Weiterhin ist aus der EP 1 862 230 A2 ein Ventil bekannt, welches ein Kontrollelement aufweist, das mit einer Membran zusammenwirkt um eine Leitung zu öffnen und zu schließen, so dass ein Fluid zum Sterilisieren und/oder Blasformen der Behältnisse, zu einer Düse befördert wird. Weiterhin weist das Ventil einen Permanentmagneten auf, welcher mit einem Öffnungs- und einem Schließmagnet zum Aktvieren und Deaktivieren des Ventils zusammenwirkt.

Auch zeigt die US 2012/0225157 A1 eine Blasformmaschine mit steriler Blasluftzuführung bei der eine Ventilanordnung die Zufuhr eines fließfähigen Mediums zu den Vorformlingen steuert.

Der vorliegenden Erfindung liegt daher die Aufgabe zugrunde, insbesondere auch die Steuerung der Blasluft für derartige Blasformvorgänge zu verbessern, insbesondere auch im Hinblick auf sterile Anwendungen.

Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Umformungseinrichtung auf, welche wiederum eine Blasformeinrichtung aufweist, die einen Hohlraum ausbildet, innerhalb dessen die Kunststoffvorformlinge durch Beaufschlagung mit einem gasförmigen Medium zu den Kunststoffbehältnissen umformbar sind. Weiterhin weist die Umformungseinrichtung eine Beaufschlagungseinrichtung auf, welche die Kunststoffvorformlinge über deren Mündung mit einem gasförmigen Medium beaufschlagt. Dabei weist diese Beaufschlagungseinrichtung wenigstens eine Ventileinrichtung auf, welche zum Steuern des dem Kunststoffvorformling zuzuführenden gasförmigen Mediums dient.

Diese Ventileinrichtung weist eine Arbeitskammer auf, die mit einem gasförmigen Medium beaufschlagbar ist und insbesondere demjenigen gasförmigen Medium, welches auch zur Expansion der Kunststoffvorformlinge dient. Daneben weist die Ventileinrichtung eine Öffnung auf, über welche das gasförmige Medium von dem Arbeitsraum den Kunststoffvorformlingen zuführbar ist (oder von den Kunststoffbehältnissen abführbar ist). Weiterhin weist die Ventileinrichtung einen Arbeitskolben auf, der innerhalb dieser Arbeitskammer beweglich zwischen wenigstens zwei Positionen ist, wobei in der ersten Position dieses Arbeitskolbens das gasförmige Medium über die Öffnung strömen kann und wobei in einer zweiten Position des Arbeitskolbens eine Strömung des gasförmigen Mediums durch die Öffnung hindurch unterbunden ist. Teilweise wird im Folgenden neben dem Begriff der Arbeitskammer auch der Begriff des Arbeitsraums verwendet.

Weiterhin weist die Ventileinrichtung einen Steuerkolben auf, der innerhalb einer Steuerkammer zwischen wenigstens zwei Positionen bewegbar ist, wobei eine Bewegung dieses Steuerkolbens wenigstens zeitweise an eine Bewegung des Arbeitskolbens gekoppelt ist.

Weiterhin weist die Steuerkammer eine Öffnung zum Zuführen und/oder Abführen (allgemein zum Leiten) eines Steuermediums auf und insbesondere eines gasförmigen Steuermediums.

Erfindungsgemäß weist die Ventileinrichtung eine Dichtungseinrichtung auf, welche in wenigstens einer Stellung des Arbeitskolbens eine Gasströmung zwischen der Arbeitskammer und der Steuerkammer im Wesentlichen verhindert. Weiterhin weist die Ventileinrichtung einen Membrankörper auf, der wenigstens einen Bereich des Steuerkolbens gegenüber einem Bereich der Steuerkammer abdichtet, wobei die Dichtungseinrichtung zwischen dem Membrankörper und wenigstens einem Abschnitt des Arbeitskolbens (und insbesondere wenigstens einer Oberfläche des Arbeitskolbens, welche zum Verschließen der Öffnung dient) angeordnet ist.

Es wird daher vorgeschlagen, dass ein Bereich der Steuerkammer und insbesondere der Steuerraum, der von einer Steuerluft zum Steuern des Ventils beaufschlagbar ist, gegenüber weiteren Bereichen des Ventils und insbesondere auch gegenüber dem Arbeitsraum, durch den das zur Expansion der Kunststoffvorformlinge dienende Gas geführt wird, abgetrennt ist. Auf diese Weise ist es möglich, dass als Steuerluft herkömmliche Luft und insbesondere nicht sterile Luft genutzt werden kann, wobei gleichzeitig ein steriler Blasvorgang ermöglicht wird.

Insbesondere handelt es sich bei dem oben erwähnten Abschnitt des Arbeitskolbens um einen Abschnitt, der auch die besagte Öffnung, durch welche hindurch die Blasluft in den Kunststoffvorformling gelangen kann, abdichten soll und kann.

Bei einer bevorzugten Ausführungsform ist die Umformungseinrichtung an einem beweglichen Träger angeordnet. Bei diesem beweglichen Träger handelt es sich insbesondere um ein Blasrad. Bevorzugt ist eine Vielzahl von Umformungseinrichtungen an diesem beweglichen Träger und insbesondere an dem besagten Blasrad angeordnet. Dabei weisen vorteilhaft die oben erwähnten Blasformeinrichtungen jeweils gegenüber einander bewegbare bzw. schwenkbare Seitenteile auf, die einen Hohlraum ausbilden, innerhalb dessen die Kunststoffvorformlinge zu den Kunststoffbehältnissen expandiert werden. Bei einer weiteren vorteilhaften Ausführungsform weist die Beaufschlagungseinrichtung eine Blasdüse auf, welche an eine Mündung der Kunststoffvorformlinge anlegbar ist, um diese so mit der Blasluft zu beaufschlagen. Diese Beaufschlagungseinrichtung steht damit vorteilhaft wenigstens zeitweise in Strömungsverbindung mit der Ventileinrichtung.

Bei einer weiteren vorteilhaften Ausführungsform weist die Umformungseinrichtung einen stangenartigen Körper auf, der in die Kunststoffvorformlinge zu deren Dehnung einführbar ist. Bei diesem stangenartigen Körper handelt es sich insbesondere um eine sogenannte Reckstange.

Bei einer weiteren vorteilhaften Ausführungsform weist die Umformungseinrichtung einen Reinraum auf, innerhalb dessen die Kunststoffvorformlinge während ihrer Expansion transportiert werden. Vorteilhaft werden dabei auch zumindest Bestandteile der Umformungseinrichtungen innerhalb dieses Reinraums geführt. Insbesondere werden die Blasformeinrichtungen innerhalb dieses Reinraums geführt bzw. transportiert. Dabei weist die Vorrichtung wenigstens eine und bevorzugt mehrere Wandungen auf, welche den Reinraum gegenüber einer Umgebung abdichten. Dabei ist es möglich, dass eine Wandung dieses Reinraums gegenüber einer weiteren Wandung dieses Reinraums beweglich angeordnet ist. Weiterhin ist vorteilhaft wenigstens eine Dichtungseinrichtung vorgesehen, welche die Bewegung dieser besagten einen Wandung gegenüber einer anderen Wandung abdichtet.

Bei dieser Dichtungseinrichtung handelt es sich besonders bevorzugt um ein sogenanntes Wasserschloss. Dieses Wasserschloss weist dabei einen umlaufenden und mit einer Flüssigkeit gefüllten Kanal auf, in welchen ein Bestandteil der weiteren Wandung eintaucht, sodass eine Abdichtung erzielt wird.

Vorteilhaft wird die besagte Reckstange innerhalb der oben erwähnten Blasdüse geführt.

Bei einer weiteren vorteilhaften Ausführungsform weist die Arbeitskammer eine weitere Öffnung auf, um der Arbeitskammer Blasluft zuzuführen. Diese Blasluft kann dabei beispielsweise aus einem Reservoir, insbesondere einem Druckluftreservoir, stammen. Bei diesem Reservoir kann es sich beispielsweise um einen Ringkanal handeln.

Bei einer weiteren vorteilhaften Ausführungsform ist der Arbeitskolben zwischen zwei Positionen verschiebbar und insbesondere durch eine Linearbewegung verschiebbar. Bei einer weiteren vorteilhaften Ausführungsform ist der Membrankörper aus einem elastischen Material gefertigt. Bei der oben erwähnten Dichtungseinrichtung handelt es sich insbesondere um eine Gleitdichtung.

Bei einer weiteren vorteilhaften Ausführungsform ist der Arbeitsraum bzw. die Arbeitskammer mit Drücken bis zu 60 bar, bevorzugt bis zu wenigstens 50 bar beaufschlagbar. Bei dem gasförmigen Medium handelt es sich insbesondere um Sterilluft.

Bei einer weiteren vorteilhaften Ausführungsform sind mehrere Ventileinrichtungen der oben beschriebenen Art vorhanden. Dabei ist es möglich, dass die Kunststoffvorformlinge mittels dieser mehreren Ventileinrichtungen in Abfolge mit unterschiedlichen Drücken beaufschlagt werden. So kann beispielsweise der Kunststoff zunächst mit einem Vorblasdruck, anschließend mit einem Zwischenblasdruck und schließlich mit einem Fertigblasdruck beaufschlagt werden, wobei bevorzugt die Druckniveaus von dem Vorblasdruck hin zu dem Fertigblasdruck ansteigen. Vorteilhaft werden dabei mehrere der oben beschriebenen Ventile verwendet. Bevorzugt weist die Vorrichtung auch mehrere Reservoirs auf, um den Kunststoffvorformlingen die Blasluft zuzuführen und/oder um die Blasluft zu speichern. Vorzugsweise sind diese Reservoirs als Ringkanäle ausgestaltet, welche eine Vielzahl von Umformungsstationen mit der Blasluft versorgen. Weiterhin kann auch eine Ventileinrichtung vorgesehen sein, welche den Auslass eines gasförmigen Mediums aus den Kunststoffbehältnissen regelt, beispielsweise den Auslass nach einem vollendeten Blasformvorgang.

Bei einer weiteren vorteilhaften Ausführungsform ist der Membrankörper in der Steuerkammer angeordnet. Dabei kann der Membrankörper diese Steuerkammer bzw. einen Steuerraum, der von Steuerluft beaufschlagt wird, begrenzen. Die Steuerkammer bzw. der Steuerraum weist dabei bevorzugt in Abhängigkeit von einer Position des Steuerkolbens ein variierendes Innenvolumen auf. Vorteilhaft wird dabei dieses Innenvolumen durch eine Bewegung des Membrankörpers verändert. Damit ist vorteilhaft der Membrankörper zwischen dem Steuerkolben und dem Steuerluftraum angeordnet. Bevorzugt ist der Steuerkolben permanent in seiner Bewegung mit dem Arbeitskolben gekoppelt. Dabei wäre es auch möglich, dass der Arbeitskolben und der Steuerkolben gemeinsam, das heißt einteilig, ausgebildet sind. Dies bedeutet, dass hier der Steuerkolben gleichzeitig auch der Arbeitskolben ist, jedoch insbesondere in seiner Längsrichtung unterschiedliche Abschnitte die Funktion des Arbeitskolbens und die Funktion des Steuerkolbens wahrnehmen. So kann derjenige Abschnitt des gesamten Bauteils, welcher sich in der Arbeitskammer befindet bzw. bewegt, als der Arbeitskolben angesehen werden und derjenige Abschnitt, der sich in der Steuerkammer befindet bzw. bewegt als Steuerkolben. Insbesondere wird als Arbeitskolben derjenige Abschnitt verstanden, der sich unabhängig von der Position des Ventils im Arbeitsbetrieb stets in der Arbeitskammer befindet und als Steuerkolben derjenige Abschnitt, der sich unabhängig von der Position des Ventils im Arbeitsbetrieb stets in der Steuerkammer befindet.

Bevorzugt wird daher eine Einheit aus dem Steuer- und dem Arbeitskolben nicht von dem Membrankörper unterbrochen.

Bei einer weiteren vorteilhaften Ausführungsform verhindert die Dichtungseinrichtung in der ersten und/oder der zweiten Position bzw. einer ersten und/oder einer weiteren Position des Arbeitskolbens eine Gasströmung zwischen der Arbeitskammer und der Steuerkammer im Wesentlichen. Unter "im Wesentlichen" wird dabei verstanden, dass diese Gasströmung vollständig verhindert werden kann, es jedoch gleichwohl unter Umständen zu geringen Gasströmungen kommen kann, wobei dies jedoch nicht beabsichtigt ist. Vorteilhaft wird die Steuerkammer durch den Membrankörper in zwei Raumteile aufgeteilt, die auch durch den Membrankörper voneinander getrennt sind. Der erste Raumteil ist dabei der oben erwähnte Steuerraum, der von der Steuerluft beaufschlagt wird. Der zweite Raum liegt zwischen diesem Steuerraum und der erwähnten Dichtungseinrichtung und vergrößert oder verkleinert sich je nach der Position des Steuerkolbens gegenüber dem Steuerraum. Es wäre auch denkbar, dass nur in einer Position der Ventileinrichtung und insbesondere in einer geschlossenen Position die Gasströmung zwischen der Arbeitskammer und der Steuerkammer verhindert ist.

Bevorzugt ist in beiden der oben genannten Stellungen, das heißt sowohl der ersten und auch der zweiten Position, durch die Dichtungseinrichtung eine Strömung in Richtung der Steuerkammer im Wesentlichen verhindert. Auf diese Weise kann verhindert werden, dass während des Arbeitsbetriebs aus der Arbeitskammer Sterilluft in Richtung der Steuerkammer entweicht.

Vorteilhaft herrscht jedoch in der Arbeitskammer stets ein höherer Innendruck als in der Steuerkammer. Auf diese Weise kann verhindert werden, dass in die Arbeitskammer verunreinigte Luft gelangen kann.

Bei einer weiteren vorteilhaften Ausführungsform weist die Ventileinrichtung eine Zuführ- und/oder Abführöffnung zum Zuführen und/oder Abführen eines Reinigungsmediums auf. Dabei kann es sich insbesondere um ein Reinigungsmedium handeln, welches zum Reinigen des Arbeitsraums dient. Vorteilhaft ist dabei diese Zuführ- und/oder Abführöffnung zwischen der Dichtungseinrichtung und dem Membrankörper angeordnet. Bei einer weiteren vorteilhaften Ausführungsform ist die besagte Zuführöffnung und/oder Abführöffnung in einem Bereich der Steuerkammer angeordnet, vorteilhaft jedoch nicht in dem Bereich des Steuerraums, sondern in demjenigen Bereich der Steuerkammer, der durch den Membrankörper abgetrennt ist.

Bei einer weiteren vorteilhaften Ausführungsform umgibt die Dichtungseinrichtung einen Abschnitt des Arbeitskolbens in dessen Umfangsrichtung. Mit anderen Worten ist der besagte Abschnitt des Arbeitskolbens durch die Dichtungseinrichtung hindurchgeführt. So kann die Dichtungseinrichtung beispielsweise in einem Übergangsabschnitt den Arbeits- oder Steuerkolben umgeben, der denjenigen Teil, der als Steuerkolben dient, mit demjenigen Teil, der als Arbeitskolben dient, verbindet. Unter einem Kolben wird im Rahmen der vorliegenden Erfindung insbesondere ein in einer axialen bzw. geraden Richtung gegenüber einem definierten Raum bewegliches Element verstanden.

Bei einer weiteren vorteilhaften Ausführungsform liegt der Membrankörper an einer Oberfläche des Steuerkolbens an. Vorteilhaft liegt der Membrankörper zumindest in bestimmten Stellungen des Steuerkolbens an einer Oberfläche des Steuerkolbens an.

Bei einer bevorzugten Ausführungsform ist diese Oberfläche des Steuerkolbens gekrümmt ausgebildet, sodass einseitige und erhöhte Belastungen auf den Membrankörper vermieden werden können. Es wäre dabei auch möglich, dass der Membrankörper wenigstens punktuell an dem Steuerkolben befestigt ist.

Vorteilhaft ist der Arbeits- und/oder Steuerkolben auch in eine dritte Position überführbar, in welcher ein Medium von dem Arbeitsraum bzw. der Arbeitskammer in die Steuerkammer oder auch in der umgekehrten Richtung strömen kann. In der dritten Position ist der Kolben derart angeordnet, dass sich die Verjüngung 144b auf Höhe der Dichtung 148 befindet, wodurch eine Strömungsverbindung zwischen der Arbeitskammer und der Steuerkammer hergestellt werden kann. Diese dritte Stellung wird jedoch insbesondere nicht im Rahmen eines Arbeitsbetriebs angefahren, sondern im Rahmen eines Reinigungsbetriebs, in dem bewusst ein Reinigungsmittel von dem Arbeitsraum zu der Steuerkammer gelangen soll. Dieses Reinigungsmedium kann über die oben erwähnte Öffnung abgeführt werden. Bei dem Reinigungsmedium handelt es sich bevorzugt um ein flüssiges und/oder gasförmiges Medium. Das Reinigungsmedium kann insbesondere durch eine Öffnung unterhalb eines Membrankörpers zugeführt werden.

Unter Reinigungsmedium wird auch Sterilisationsmedium verstanden, welches insbesondere gasförmiges Wasserstoffperoxid und/oder Peressigsäure darstellt bzw. enthält.

Zu diesem Zweck kann beispielsweise der Arbeits- bzw. Steuerkolben einen sich in radialer Richtung verjüngenden bzw. verjüngten Abschnitt aufweisen, sodass ein Abstand zwischen einer Außenoberfläche des Arbeits- bzw. Steuerkolbens und der oben erwähnten Dichtungseinrichtung entsteht. Durch diesen Abstand kann wiederum ein Reinigungsmedium strömen. Vorteilhaft ist dieser verjüngte Abschnitt in einer Umfangsrichtung dieses Kolbens ausgebildet.

Insbesondere umfasst die Vorrichtung eine Vielzahl von Umformungsstationen. Auf bzw. an jeder Umformungsstation ist insbesondere ein Ventilblock angeordnet, an oder in welchem mindestens zwei, bevorzugt mindestens drei, Ventileinrichtungen angeordnet sind.

Die mindestens zwei Ventileinrichtungen sind insbesondere unterschiedlichen Funktionen zugordnet - so kann durch Schaltung einer ersten Ventileinrichtung ein Medium zum Vorblasen, beispielsweise mit einem Druck von vier bis 30 bar, eingeleitet werden und mit der zweiten ein Medium zum Fertigblasen des Hohlkörpers, beispielsweise mit einem Druck von zehn bis 40 bar. Jedes Ventil ist dabei bevorzugt mit einem sogenannten Ringkanal verbunden, welches als Verteiler für die Druckluft zu der Vielzahl an Blasstationen genutzt wird. Um unterschiedliche Drücke bereitzustellen, sind insbesondere zwei Ringkanäle vorgesehen, in welchen das Medium unter den gerade genannten Drücken verteilt wird. Der erste Ringkanal ist dabei mit einer Vielzahl von ersten Ventilen an den Umformungsstationen verbunden, der zweite mit einer Vielzahl von zweiten Ventilen.

In einem Sterilisationsbetrieb gelangt das Sterilisationsmedium über die Ringkanäle zu den Ventileinrichtungen und von diesen in den Innenraum des Reinraums oder zu weiteren Ventileinrichtungen.

Bei einer weiteren vorteilhaften Ausführungsform sind mindestens zwei, bevorzugt mindestens drei, Ventileinrichtungen in oder an einem Ventilblock angeordnet, welcher bevorzugt an einer Umformungsstation angeordnet ist. Bevorzugt handelt es sich bei wenigstens einer dieser Ventileinrichtung, bevorzugt bei mehreren Ventileinrichtungen und besonders bevorzugt bei allen diesen Ventileinrichtungen um eine Ventileinrichtung der oben beschriebenen Art.

Die vorliegende Erfindung ist weiterhin auf eine pneumatisch gesteuerte Ventileinrichtung zum Steuern einer Medienzufuhr an ein Behältnis gerichtet. Dabei weist diese Ventileinrichtung eine Arbeitskammer auf, die mit einem fließfähigen Medium beaufschlagbar ist sowie eine Öffnung, über welche das fließfähige Medium von der Arbeitskammer bzw. einem Arbeitsraum der Arbeitskammer den Behältnissen zuführbar ist. Weiterhin weist die Ventileinrichtung einen Arbeitskolben auf, der innerhalb dieser Arbeitskammer beweglich zwischen wenigstens zwei Positionen ist, wobei in einer ersten Position dieses Arbeitskolbens das fließfähige Medium über die Öffnung strömen kann und wobei in einer zweiten Position (einer Schließposition) des Arbeitskolbens gegenüber dem Arbeitsraum eine Strömung des fließfähigen Mediums durch die besagte Öffnung unterbunden ist.

Weiterhin weist die Ventileinrichtung einen Steuerkolben auf, der innerhalb einer Steuerkammer zwischen wenigstens zwei Positionen bewegbar ist, wobei eine Bewegung des Steuerkolbens wenigstens zeitweise an eine Bewegung des Arbeitskolbens gekoppelt ist und wobei die Steuerkammer eine Öffnung zum Zuführen eines gasförmigen Steuermediums aufweist.

Erfindungsgemäß weist die Ventileinrichtung eine Dichtungseinrichtung auf, welche in der ersten und der zweiten Stellung des Arbeitskolbens eine Gasströmung zwischen der Arbeitskammer und der Steuerkammer im Wesentlichen unterbindet und die Ventileinrichtung weist weiterhin einen Membrankörper auf, der wenigstens einen Bereich des Steuerkolbens gegenüber wenigstens einem Bereich der Steuerkammer abdichtet, wobei die Dichtungseinrichtung zwischen dem Membrankörper und wenigstens einem Abschnitt des Arbeitskolbens angeordnet ist und wobei der Membrankörper einen von dem gasförmigen Steuermedium beaufschlagbaren Steuerraum der Steuerkammer begrenzt.

Bevorzugt wird die besagte Ventileinrichtung für Blasformmaschinen und insbesondere für sterile Blasformmaschinen verwendet. Es wäre jedoch auch generell denkbar, die hier beschriebene Ventileinrichtung in anderen Bereichen einzusetzen, beispielsweise für sterile Füllmaschinen. In diesem Falle würde es sich bei dem fließfähigen Medium um eine Flüssigkeit handeln, es wäre jedoch auch möglich, dass es sich bei dem fließfähigen Medium um ein gasförmiges Medium handelt, beispielsweise ein steriles Medium, mit dem ein Kopfraum der Behältnisse beaufschlagt wird. Weiterhin könnte eine derartige Ventileinrichtung auch für Sterilisationseinrichtungen verwendet werden, beispielsweise für Einrichtungen, welche Behältnisse mit Sterilluft ausblasen. Daneben wäre auch ein Einsatz für Spüleinrichtungen und dergleichen denkbar. Die Anmelderin behält sich vor, auch Schutz für derartige Anwendungen der hier beschriebenen Ventileinrichtungen zu beanspruchen.

Es wäre weiterhin auch möglich, dass es sich bei der Ventileinrichtung um eine hydraulisch betätigbare Ventileinrichtung handelt, sodass der Steuerraum nicht von einem gasförmigen, sondern von einem flüssigen Medium beaufschlagt wird.

Die vorliegende Erfindung ist weiterhin auf ein Verfahren zum Umformen von Kunststoffvorformlingen zu Kunststoffbehältnissen gerichtet. Dabei werden die Kunststoffvorformlinge entlang eines vorgegebenen Transportpfades transportiert und während dieses Transports durch Beaufschlagung mit einem gasförmigen Medium zu den Kunststoffbehältnissen umgeformt. Dabei wird den Kunststoffvorformlingen ein steriles gasförmiges Medium zugeführt und die Zuführung des gasförmigen Mediums wird durch wenigstens eine Ventileinrichtung gesteuert, wobei diese Ventileinrichtung eine durch ein weiteres gasförmiges Medium gesteuerte Ventileinrichtung ist und einen von dem gasförmigen Medium beaufschlagbaren Arbeitsraum aufweist.

Erfindungsgemäß ist das weitere gasförmige Medium ein unsteriles Medium und von diesem weiteren gasförmigen Medium wird ein Steuerraum zum Bewegen eines Steuerkolbens beaufschlagt, wobei dieser Steuerraum durch einen flexiblen Membrankörper begrenzt wird. Bevorzugt wird der Arbeitsraum von einer Dichtungseinrichtung begrenzt, der gegenüber dem Arbeitskolben beweglich ist.

Bevorzugt wird das Arbeitsmedium mit einem Druck zugeführt, der kleiner ist als 50 bar, bevorzugt kleiner als 40 bar aber größer als 8 bar, besonders bevorzugt kleiner als 35 bar und größer als 25 bar.

Bei einem weiteren bevorzugten Verfahren werden die Kunststoffvorformlinge wenigstens zeitweise während ihrer Expansion mittels eines stangenartigen Körpers und einer Reckstange gereckt.

Weitere Vorteile und Ausführungsformen ergeben sich aus den beigefügten Zeichnungen. Darin zeigen:
- Fig. 1: Eine grobschematische Darstellung einer Vorrichtung zum Umformen von Kunststoffvorformlingen zu Kunststoffbehältnissen;
- Fig. 2: eine weitere Darstellung einer Umformungseinrichtung;
- Fig. 3: eine Darstellung einer erfindungsgemäßen Ventileinrichtung;
- Fig. 4: eine Darstellung einer erfindungsgemäßen Ventileinrichtung in einer weiteren Ausführungsform;
- Fig. 5a - 5c: drei Darstellungen einer Ventileinrichtung in unterschiedlichen Arbeitspositionen; und
- Fig. 6: eine Darstellung eines kombinierten Arbeits- und Steuerkolbens.

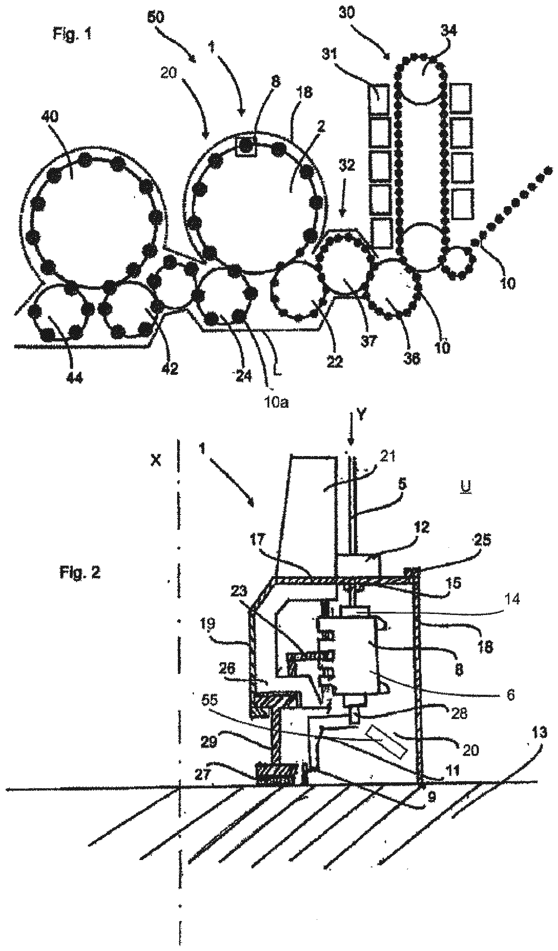

Figur 1 zeigt eine schematische Darstellung einer Anlage zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind. In einer weiteren bevorzugten Ausführungsform ist der Reinraum 20 nicht nur im Bereich des Transportrads 2 und Befüllungseinrichtung 40 angeordnet, sondern beginnt möglicherweise schon im Bereich der Heizeinrichtung 30, der Sterilisationseinrichtung 32, der Kunststoffvorformlingzuführung und/oder der Kunststoffvorformlingherstellung. Man erkennt, dass dieser Reinraum 20 in dem Bereich der Sterilisationseinheit 32 beginnt. In diesem Bereich können Schleuseneinrichtungen vorgesehen sein, um die Kunststoffvorformlinge in den Reinraum 20 einzuführen, ohne dass dabei zu viel Gas innerhalb des Reinraums strömt und so verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10a expandiert. Obwohl hier nicht detailliert gezeigt, befindet sich nicht der gesamte Bereich der Transporteinrichtung 2 innerhalb des Reinraums 20, sondern der Reinraum 20 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 20 in dem Bereich der Zuführeinrichtung 22 und der Abführeinrichtung 24 jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 10a von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 20. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 20 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 20 im Bereich der Vorrichtung 1 auf einen geringst möglichen Bereich reduziert, nämlich im Wesentlichen auf die Blasstationen 8 selbst. Durch diese kleinbauende Gestaltung des Reinraums 20 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 bzw. einem Träger drehend um eine Achse X bewegt. Die Blasstation 8 ist, wie in Figur 2 ersichtlich, innerhalb des Reinraums 20, der hier kanalartig ausgebildet ist, geführt. Dieser Reinraum 20 wird abgeschlossen durch eine bewegliche Seitenwand 19 und einen einteilig mit dieser Seitenwand 19 ausgebildeten Deckel 17. Diese Seitenwand 19 und der Deckel 17 drehen dabei mit der Blasstation 8 mit.

Das Bezugszeichen 18 bezieht sich auf eine weitere Wandung, welche den Reinraum 20 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 20 und hier unmittelbar an der Wandung 19 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 20 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 20 angeordnet. Es wäre jedoch beispielsweise auch möglich, etwa bereits einen Abschnitt 11 unterhalb der einzelnen Blasstationen 8 aus dem Reinraum 20 herauszuführen.

Die Transporteinrichtung 2 kann noch weitere Elemente aufweisen, welche oberhalb des Reinraums 20 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 21 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 20 als auch innerhalb des Reinraums 20 sind. Zu diesem Zweck ist es möglich, außerhalb des Reinraums 20 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt. Das Bezugszeichen U kennzeichnet die (unsterile) Umgebung des Reinraums 20. Das Bezugszeichen 28 kennzeichnet einen Träger zum Tragen einer Bodenform, welche ebenfalls einen Bestandteil der Blasform 4 ausbildet. Dieser Träger ist dabei ebenfalls in der Richtung Y bewegbar.

Das Bezugszeichen 55 bezieht sich auf eine Sterilisationseinrichtung, welche hier bevorzugt im Inneren des Reinraums 20 angeordnet ist und zum Sterilisieren der einzelnen Umformungsstationen bzw. Bestandteilen dieser Umformungsstationen 8 dient. Diese Sterilisationseinrichtung 55 kann dabei die Umformungsstationen 8 beispielsweise mit Wasserstoffperoxid oder einem anderen Sterilisationsmittel beaufschlagen. Dabei kann die Sterilisationseinrichtung 55 stationär angeordnet sein und die Umformungsstationen können sich gegenüber dieser Sterilisationseinrichtung 55 bewegen. Diese Sterilisationseinrichtung bzw. Beaufschlagungseinrichtung 55 kann sich am Transportrad 2 oder an der stehenden Wandung 18 befinden oder generell stationär angeordnet sein und aus Düsen oder ähnlichem bestehen. Zudem ist es vorteilhaft, Sterilluft zum Sterilisieren des Reinraums 20 über das Lüftungssystem in den Reinraum 20 einzubringen.

Die (nicht gezeigten) Blasformen bzw. Blasformeinrichtungen sind innerhalb der Blasformträger 6 angeordnet. Genauer können dabei zwei Blasformträgerteile angeordnet sein, die gegenüber einander schwenkbar sind und jeweils ein Blasformteil halten. Durch diesen Schwenkvorgang können die Blasformen zum Einbringen von Kunststoffvorformlingen und zum Entnehmen fertig geblasener Behältnisse geöffnet werden. Diese Blasformträger und Blasformen sind dabei ebenfalls innerhalb des Reinraums angeordnet.

Es wäre jedoch auch (anders als in Fig. 2 gezeigt) möglich und bevorzugt, dass die Transporteinrichtung 2 bzw. der Träger einen C-förmigen Außenumfang aufweist, der auch teilweise die Außenwandungen des Reinraums ausbildet. Damit dreht sich hier diese C - förmige Reinraumwand mit der Transporteinrichtung 2 d.h. dem Blasrad mit. Bei dieser Ausführungsform ist die untere Begrenzung des Reinraums von dem Boden 13 beabstandet und bewegt sich relativ zu dem Boden. Auf diese Weise kann der Reinraum noch kleiner gestaltet werden als in Fig.2 gezeigt. Eine Abdichtung dieses C- förmigen Profils der Transporteinrichtung, welches hier sowohl eine Innenwandung als auch eine untere und obere Abdeckung des Reinraums ausbildet, findet hier bevorzugt nur gegenüber der Außenwandung des Reinraums statt. Diese Außenwandung ist dabei vorteilhaft stationär angeordnet.

Das Bezugszeichen 14 kennzeichnet grob schematisch eine Beaufschlagungseinrichtung, welche die Kunststoffvorformlinge mit der Blasluft beaufschlagt. Dabei kann diese Beaufschlagungseinrichtung eine Blasdüse aufweisen, welche an einen Mündungsrand der Kunststoffvorformlinge ansetzbar ist und somit auch abdichtend eine Beaufschlagung desselben mit Blasluft ermöglicht. Das Bezugszeichen 15 kennzeichnet, grob schematisch einen Ventilblock, der eine Vielzahl von Ventileinrichtungen (in Fig. 2 nicht gezeigt) aufweist, um die Zuführung der Blasluft an die Kunststoffvorformlinge zu steuern. Diese Ventileinrichtungen sind dabei bevorzugt in der obigen Weise ausgeführt. Die hier beschriebenen Ventileinrichtungen sind jedoch bevorzugt auch Bestandteil der Beaufschlagungseinrichtung.

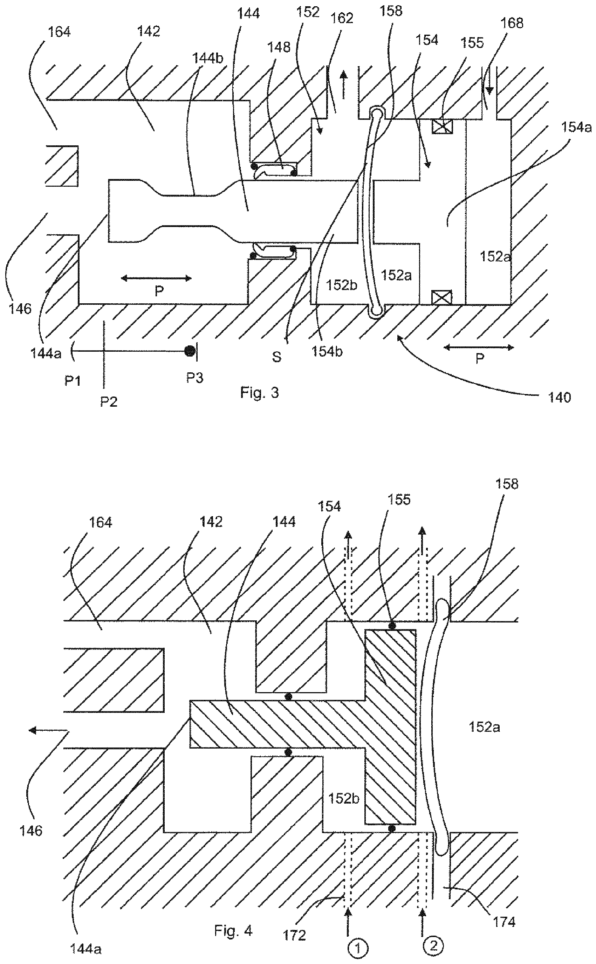

Fig. 3 zeigt eine erfindungsgemäße Ventileinrichtung. Diese Ventileinrichtung weist dabei einen Arbeitskolben 144 auf, der gegenüber einem Arbeitsraum 142 bewegbar und hier in Richtung des Doppelpfeils P verschiebbar angeordnet ist. Dabei kann dieser Arbeitskolben, wie in Fig. 3 gezeigt, in einer Stellung die Öffnung 146 verschließen, sodass ein in dem Arbeitsraum bzw. der Arbeitskammer 142 anliegendes gasförmiges Medium nicht durch die Öffnung 146 in Richtung eines (nicht gezeigten) Kunststoffvorformlings gelangen kann. Das Bezugszeichen 164 kennzeichnet eine Zuführöffnung, über welche das Arbeitsmedium, insbesondere Blasluft dem Arbeitsraum 142 zugeführt wird. In einer zweiten (hier in Fig. 3 gezeigten) Stellung gibt der Arbeitskolben 144, genauer gesagt seine Stirnfläche 144a, die Öffnung 146 frei, sodass das Blasmedium über diese Öffnung austreten kann und den Kunststoffvorformling so expandieren kann.

Das Bezugszeichen 144b kennzeichnet einen verjüngten Bereich des Arbeitskolbens, welcher, wie unten genauer erläutert wird, dazu dient, um in einem Reinigungsmodus Reinigungsmedium von Arbeitskammer 142 hin zu einer Steuerkammer 152 strömen zu lassen. Unterhalb des Arbeitskolbens sind die drei Stellungen bzw. Positionen P1, P2 und P3 dargestellt, in denen entweder die Öffnung verschlossen oder geöffnet wird oder auch eine Reinigung möglich ist.

Das Bezugszeichen 148 kennzeichnet eine Dichtungseinrichtung, welche wenigstens in den Positionen P1 und P2 des Arbeitskolbens 142 sowie auch in den dazwischen liegenden Positionen einen Durchtritt des gasförmigen Mediums von der Arbeitskammer 142 hin zu der Steuerkammer 152 im Wesentlichen verhindert. Bevorzugt ist diese Dichtungseinrichtung 148 als aseptische Dichtungseinrichtung ausgeführt. Dabei ist es möglich, dass die Dichtungseinrichtung 148 in dem den Kolben umgebenden Gehäuse angeordnet ist, wie in der Figur veranschaulicht. Das Gehäuse könnte dabei eine Aufnahmeausnehmung zur Aufnahme der Dichtungseinrichtung 148 aufweisen. Es wäre jedoch auch denkbar, dass die Dichtungseinrichtung 148 in den Kolben selbst integriert ist. Der Kolben könnte hierzu eine Ausnehmung aufweisen, in welcher ein Abschnitt der Dichtungseinrichtung einliegt. Auch wäre es denkbar, dass der Dichtungseinrichtung ein Reinigungsmittel zuführbar ist.

In der Steuerkammer 152 ist ein Steuerkolben 154 angeordnet, der ebenfalls in Richtung des Doppelpfeils P verschiebbar ist. Mithilfe dieses Steuerkolbens kann dabei die Bewegung dieses Arbeitskolbens zumindest nach links erreicht werden.

Weiterhin ist ein Membrankörper 158 vorgesehen, der die Steuerkammer 152 in einen Steuerraum 152a und einen weiteren Raum 152b abtrennt. Dieser Steuerraum 152a wird über eine Öffnung 168 mit Steuerluft beaufschlagt, welche wiederum die Bewegung des Steuerkolbens 154 in der Steuerkammer 152 bewirkt. Der Membrankörper 158 ist dabei gleichzeitig eine Sterilraumgrenze S. In Fig. 3 befindet sich rechts von dieser Sterilraumgrenze bzw. dem Membrankörper 158 unsteriles Medium, das heißt die Steuerluft. Links von dem Membrankörper hingegen befindet sich ein steriler Bereich.

Das Bezugszeichen 162 kennzeichnet eine Öffnung, über die beispielsweise ein Reinigungsmedium in einem Reinigungsbetrieb, insbesondere aber gasförmiges Sterilisationsmedium in einem Sterilisationsbetrieb, abgeführt werden kann.

Fig. 4 zeigt eine weitere grobschematische Darstellung einer erfindungsgemäßen Ventileinrichtung. Der wesentliche Unterschied zu der in Fig. 3 gezeigten Ausgestaltung ist hier, dass der Arbeitskolben 144 und der Steuerkolben 154 einteilig ausgebildet sind. Auch ist hier der gesamte Steuerkolben 154 in dem unsterilen Bereich angeordnet. Dieser unsterile Bereich wird hier von dem Membrankörper 158 abgedichtet.

Bei dieser Ausgestaltung befindet sich damit der vollständige Steuerkolben 154 / Arbeitskolben 144 in einem sterilen Bereich, während bei der in Fig. 3 gezeigten Situation der Membrankörper 158 den Steuerkolben bzw. einen Bereich 154a des Steuerkolbens gegenüber dem Steuerraum 152b abdichtet (und einen anderen Bereich 154b des Steuerkolbens 154 gegenüber dem Steuerraum 152a abdichtet), dichtet der Membrankörper bei den in den nachfolgenden Figuren gezeigten Ausführungsformen den gesamten Steuerkolben gegenüber dem Steuerraum 152a ab.

Damit wirkt bei der in Fig. 3 gezeigten Ausführungsform die Steuerluft direkt auf den Steuerkolben, während die Steuerluft bei den folgenden Ausführungsformen bevorzugt über den Membrankörper 158 auf den Steuerkolben 154 wirkt. Allerdings ist auch bei der in Fig. 3 gezeigten Ausführungsform ein Teil des Steuerkolbens in dem Steuerraum 152b angeordnet, nämlich derjenige Bereich 154b, der nach rechts über die Dichtungseinrichtung 148 hinausragt. Dieser Bereich ist, da er sich noch in dem Steuerraum befindet, noch dem Steuerkolben zuzurechnen. Dieser Bereich 154b kann über den Membrankörper 158 hinweg mit dem Bereich 154a des Steuerkolbens in einer festen Verbindung stehen.

Das hier vorgeschlagene Ventil eignet sich bevorzugt auch für ein Recycling von Blasluft. Dabei kann über das Ventil nicht nur der eigentliche Blasvorgang gesteuert werden, es wäre auch möglich, nach dem Fertigblasen des Behältnisses Luft aus dem Behältnis heraus über ein erfindungsgemäßes Ventil zurück in einen Ringraum bzw. eine Ringleitung strömen zu lassen.

Damit werden im Rahmen der vorliegenden Anmeldung als Steuerkolben insbesondere diejenigen Abschnitte verstanden, die sich im Arbeitsbetrieb (im Wesentlichen) innerhalb des Steuerraums bewegen und als Arbeitskolben diejenigen Abschnitte, welche sich in der Arbeitskammer 142 bewegen.

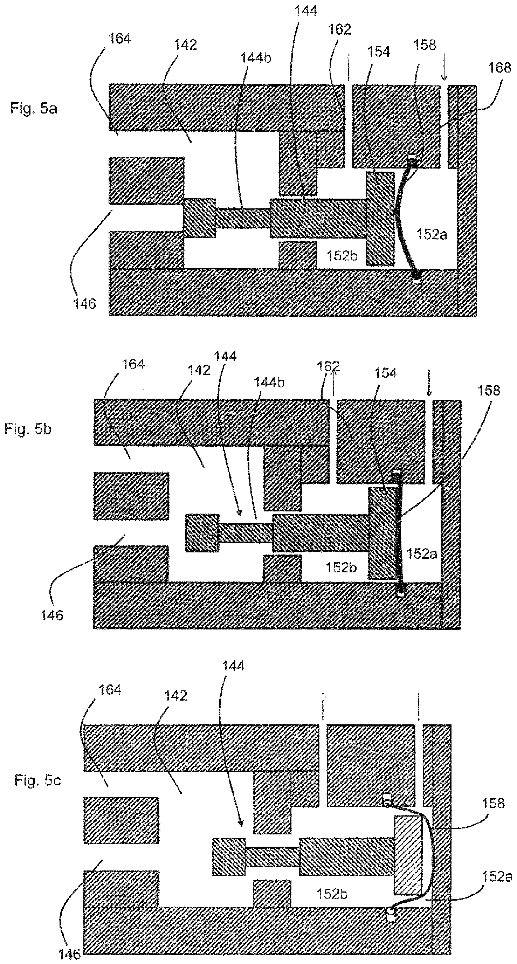

Die Fig. 5a bis 5c zeigen eine erfindungsgemäße Ventileinrichtung in drei verschiedenen Schaltpositionen. Bei der in Fig. 5a gezeigten Position ist die Öffnung 146 von dem Arbeitskolben 144 bzw. dessen Stirnfläche 144a verschlossen. In dieser Position gelangt keine Blasluft zu dem Kunststoffvorformling. Der Steuerkolben 154 bzw. der Steuerkolbenabschnitt ist hier in einer unteren Stellung. Der Membrankörper 158 kann hier an einer Oberfläche des Steuerkolbens 154 anliegen, muss dies aber nicht. Man erkennt, dass der Steuerkolben einen wesentlich größeren Querschnitt aufweist als der Arbeitskolben bzw. dessen Stirnfläche 142a. Auf diese Weise kann auch mit vergleichsweise geringen Drücken an Steuerluft das Ventil in die geschlossene Stellung gebracht werden, selbst wenn in dem Arbeitsraum 142 ein hoher Druck von beispielsweise 40 bar anliegt.

Bei der in Fig. 5b gezeigten Situation ist das Ventil 140 in einer geöffneten Stellung, das heißt die Öffnung 146 ist von der Stirnfläche 144a freigegeben. Andererseits wird jedoch auch in dieser Position ein Durchtritt der Blasluft in Richtung des Steuerraums bzw. der Steuerkammer 152 verhindert. Der Steuerkolben 154 liegt hier bevorzugt an der Membran 158 an. Die Membran stellt auch hier wiederum eine Sterilraumgrenze dar.

Bei der in Fig. 5c gezeigten Situation befindet sich nunmehr der verjüngte Bereich 144b des Arbeitskolbens bzw. der Einheit aus Arbeitskolben und Steuerkolben in dem Bereich der Dichtungseinrichtung 148. In dieser Situation kann ein Reinigungsmedium von dem Arbeitsraum 142 hin zu der Steuerkammer 152 gelangen. Bei der hier gezeigten Ausgestaltung ist die Verjüngung 144b umlaufend ausgebildet, dies ist jedoch nicht zwangsweise nötig. Es wäre auch möglich, dass ein gewisser Führungseffekt beibehalten wird, in dem diese Verjüngung nicht umlaufend ausgebildet ist.

Der Membrankörper 158 wird bei der in Fig. 5c gezeigten Ausführungsform durch den Steuerkolben 154 belastet.

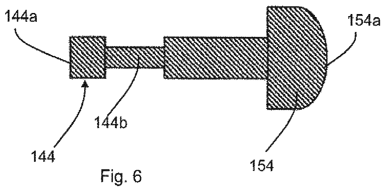

Fig. 6 zeigt eine Darstellung eines Arbeits- und Steuerkolbens. Dabei ist das Bezugszeichen 144 wiederum auf den Abschnitt des Arbeitskolbens gerichtet und das Bezugszeichen 154 auf den Abschnitt des Steuerkolbens. Man erkennt, dass der Steuerkolben 154 hier eine gekrümmte Stirnfläche 154a aufweist, wobei es sich hierbei um diejenige Fläche handelt, welche den Membrankörper (nicht gezeigt) berührt. Durch diese gekrümmte Oberfläche kann der Membrankörper, insbesondere in einem Reinigungsbetrieb des Ventils stark geschont werden.

Bei den hier dargestellten Varianten kann sich das Ventil in drei Stellungen befinden, nämlich einer geschlossenen Stellung, einer geöffneten Stellung und einer Reinigungsstellung. Es wäre jedoch auch möglich, dass in der geöffneten Stellung des Ventils gleichzeitig auch eine Reinigung möglich ist, etwa indem sich der verjüngte Bereich des Ventils bereits hier im Bereich der Dichtungseinrichtung befindet. Daneben könnte noch ein weiteres, in den Figuren nicht dargestelltes, Ventil vorgesehen sein, welches eine Ableitung eines Reinigungsmediums bzw. SIP Mediums öffnen und sperren kann. Bei einer weiteren vorteilhaften Ausführungsform könnte auch eine separate SIP - Leitung in einen oder mehrere der gezeigten Räume bzw. Kammern der Ventileinrichtung hineinführen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Umformungsvorrichtung
- 2: Transportrad
- 5: Reckstange
- 6: Blasformträger
- 8: Blas-/Umformungsstationen
- 9: Führungskurve
- 10: Kunststoffvorformlinge
- 10a: Behältnisse
- 11: Folgeeinrichtung
- 12: Schlitten
- 13: Boden
- 14: Beaufschlagungseinrichtung
- 15: Ventilblock
- 17: Deckel
- 18: weitere Wandung
- 19: Seitenwand
- 20: Reinraum
- 21: Halterung für Schlitten
- 22: Zuführeinrichtung
- 23: Halteeinrichtung
- 24: Abführeinrichtung
- 25: Dichtungseinrichtung
- 26: Träger
- 27: weitere Dichtungseinrichtung
- 28: Träger zum Tragen einer Bodenform
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage zum Herstellen von Kunststoffbehältnissen
- 55: Sterilisationseinrichtung
- 140: Ventil
- 142: Arbeitsraum / Arbeitskammer
- 144: Arbeitskolben
- 144b: verjüngter Bereich
- 146: Öffnung
- 148: Dichtungseinrichtung
- 152: Steuerkammer
- 152a, 152b: Steuerräume
- 154: Steuerkolben
- 154a,b: Bereiche des Steuerkolbens
- 158: Membrankörper
- 162: Abführöffnung
- 164: Zuführöffnung
- 168: Öffnung

- P: Doppelpfeil
- P1 - P3: Stellungen / Positionen
- S: Sterilraumgrenze
- L: Reinraumgrenze
- X: Achse

## Patentansprüche

1. Vorrichtung (1) zum Umformen von Kunststoffvorformlingen (10) zu Kunststoffbehältnissen mit wenigstens einer Umformungseinrichtung (8), welche eine Blasformeinrichtung aufweist, die einen Hohlraum ausbildet, innerhalb dessen die Kunststoffvorformlinge (10) durch Beaufschlagung mit einem gasförmigen Medium zu den Kunststoffbehältnissen umformbar sind, wobei die Umformungseinrichtung (8) eine Beaufschlagungseinrichtung (14) aufweist, welche die Kunststoffvorformlinge über deren Mündung mit einem gasförmigen Medium beaufschlagt und wobei diese Beaufschlagungseinrichtung (14) wenigstens eine Ventileinrichtung (140) zum Steuern des dem Kunststoffvorformling zuzuführenden gasförmigen Mediums aufweist, und wobei die Ventileinrichtung (140) eine Arbeitskammer (142) aufweist, die mit einem gasförmigen Medium beaufschlagbar ist, sowie eine Öffnung (146), über welche das gasförmige Medium von dem Arbeitsraum (142) den Kunststoffvorformlingen (10) zuführbar und/oder von diesen abführbar ist und wobei die Ventileinrichtung (140) einen Arbeitskolben (144) aufweist, der innerhalb dieser Arbeitskammer (142) beweglich zwischen wenigstens zwei Positionen (P1, P2) ist, wobei in einer ersten Position (P2) dieses Arbeitskolbens (144) das gasförmige Medium über die Öffnung (146) strömen kann und wobei in einer zweiten Position (P1) des Arbeitskolbens (144) gegenüber der Arbeitskammer (142) eine Strömung des gasförmigen Mediums durch die Öffnung (146) unterbunden ist, und wobei die Ventileinrichtung (140) einen Steuerkolben (154) aufweist, der innerhalb einer Steuerkammer (152) zwischen wenigstens zwei Positionen bewegbar ist, wobei eine Bewegung des Steuerkolbens (154) wenigstens zeitweise an eine Bewegung des Arbeitskolbens (144) gekoppelt ist und wobei die Steuerkammer (152) eine Öffnung (168) zum Zuführen und/oder Abführen eines Steuermediums aufweist
**dadurch gekennzeichnet, dass**
die Ventileinrichtung (140) eine Dichtungseinrichtung (148) aufweist, welche in wenigstens einer Stellung des Arbeitskolbens eine Gasströmung zwischen der Arbeitskammer (142) und der Steuerkammer (152) im Wesentlichen verhindert und wobei die Ventileinrichtung (140) weiterhin einen Membrankörper (158) aufweist, der wenigstens einen Bereich (154a, 154b) des Steuerkolbens (154) gegenüber wenigstens einem Bereich (152a, 152b) der Steuerkammer (152) abdichtet, wobei die Dichtungseinrichtung (148) zwischen dem Membrankörper (158) und wenigstens einem Abschnitt des Arbeitskolbens (144) angeordnet ist.

2. Vorrichtung (1) nach Anspruch 1,
**dadurch gekennzeichnet, dass**
der Membrankörper (158) in der Steuerkammer (152) angeordnet ist.

3. Vorrichtung (1) nach wenigstens einem der vorangegangenen Ansprüche,
**dadurch gekennzeichnet, dass**
der Membrankörper (158) die Steuerkammer (152) und/oder einen Steuerraum (152a, 152b) begrenzt.

4. Vorrichtung (1) nach wenigstens einem der vorangegangenen Ansprüche,
**dadurch gekennzeichnet, dass**
die Dichtungseinrichtung (148) in der ersten und/oder der zweiten Position des Arbeitskolbens (144) eine Gasströmung zwischen der Arbeitskammer (142) und der Steuerkammer (152) im Wesentlichen verhindert.

5. Vorrichtung (1) nach wenigstens einem der vorangegangenen Ansprüche,
**dadurch gekennzeichnet, dass**
der Arbeitskolben (144) in eine dritte Position (P3) bezüglich der Arbeitskammer (142) bringbar ist und in dieser Position eine Medienströmung zwischen der Arbeitskammer (142) und der Steuerkammer (152) ermöglicht ist.

6. Vorrichtung (1) nach wenigstens einem der vorangegangenen Ansprüche,
**dadurch gekennzeichnet, dass**
die Ventileinrichtung (140) eine Zuführöffnung zum Zuführen eines Reinigungsmediums aufweist.

7. Vorrichtung (1) nach wenigstens einem der vorangegangenen Ansprüche,
**dadurch gekennzeichnet**, dass'
die Dichtungseinrichtung (148) einen Abschnitt des Arbeitskolbens (144) in dessen Umfangsrichtung umgibt.

8. Vorrichtung (1) nach wenigstens einem der vorangegangenen Ansprüche,
**dadurch gekennzeichnet, dass**
der Membrankörper (158) an einer Oberfläche (154a) des Steuerkolbens (154) anliegt.

9. Vorrichtung (1) nach wenigstens einem der vorangegangenen Ansprüche,
**dadurch gekennzeichnet, dass**
mindestens zwei, bevorzugt mindestens drei, Ventileinrichtungen (140) in oder an einem Ventilblock (15) angeordnet sind, welcher an einer Umformungsstation (8) angeordnet ist.

10. Pneumatisch gesteuerte Ventileinrichtung (140) zum Steuern einer Medienzufuhr an ein Behältnis wobei die Ventileinrichtung (140) eine Arbeitskammer (142) aufweist, die mit einem fließfähigen Medium beaufschlagbar ist, sowie eine Öffnung (146), über welche das fließfähige Medium von der Arbeitskammer (142) den Behältnissen (10a) zuführbar ist und wobei die Ventileinrichtung (140) einen Arbeitskolben (144), der innerhalb dieser Arbeitskammer (142) beweglich zwischen wenigstens zwei Positionen (P1, P2) ist, aufweist wobei in einer ersten Position dieses Arbeitskolbens (144) gegenüber der Arbeitskammer (142) das fließfähige Medium über die Öffnung (146) strömen kann und wobei in einer zweiten Position des Arbeitskolbens (144) gegenüber der Arbeitskammer eine Strömung des fließfähigen Mediums durch die Öffnung (146) unterbunden ist, und wobei die Ventileinrichtung (140) einen Steuerkolben (154) aufweist, der innerhalb einer Steuerkammer (152) zwischen wenigstens zwei Positionen bewegbar ist, wobei eine Bewegung des Steuerkolbens (154) wenigstens zeitweise an eine Bewegung des Arbeitskolbens (144) gekoppelt ist und wobei die Steuerkammer (152) eine Öffnung (168) zum Zuführen und/oder Abführen eines gasförmigen Steuermediums aufweist
**dadurch gekennzeichnet, dass**
die Ventileinrichtung (140) eine Dichtungseinrichtung (148) aufweist, welche in der ersten und der zweiten Stellung des Arbeitskolbens eine Gasströmung zwischen der Arbeitskammer (142) und der Steuerkammer (152) im Wesentlichen verhindert und wobei die Ventileinrichtung (140) weiterhin einen Membrankörper (158) aufweist, der wenigstens einen Bereich (154a, 154b) des Steuerkolbens (154) gegenüber wenigstens einem Bereich der Steuerkammer (152) abdichtet, wobei die Dichtungseinrichtung (148) zwischen dem Membrankörper (158) und wenigstens einem Abschnitt des Arbeitskolbens (144) angeordnet ist und wobei der Membrankörper (158) einen von dem gasförmigen Steuermedium beaufschlagten Steuerraum (152a) der Steuerkammer (152) begrenzt.

11. Verfahren zum Umformen von Kunststoffvorformlingen (10) zu Kunststoffbehältnissen, wobei die Kunststoffvorformlinge (10) entlang eines vorgegebenen Transportpfades transportiert und während dieses Transports durch Beaufschlagung mit einem gasförmigen Medium zu den Kunststoffbehältnissen umgeformt werden, wobei den Kunststoffvorformlingen (10) ein steriles gasförmiges Medium zugeführt wird und wobei die Zuführung des gasförmigen Mediums durch wenigstens eine Ventileinrichtung (140) gesteuert wird, wobei diese Ventileinrichtung (140) eine durch ein weiteres gasförmiges Medium gesteuerte Ventileinrichtung (140) ist und einen von dem gasförmigen Medium beaufschlagbaren Arbeitsraum aufweist,
**dadurch gekennzeichnet, dass**
das weitere gasförmige Medium ein unsteriles Medium ist und von diesem weiteren gasförmigen Medium ein Steuerraum (152a) zum Bewegen eines Steuerkolbens (154) beaufschlagt wird, wobei dieser Steuerraum (152a) durch eine flexible Membran (158) begrenzt wird.

## Claims

1. An apparatus (1) for moulding plastic preforms (10) into plastic containers, comprising at least one moulding unit (8) that includes a blow mould unit forming a cavity, within which the plastic preforms (10) can be moulded by applying a gaseous medium to the plastic containers, wherein the moulding unit (8) includes an application unit (14) that applies a gaseous medium to the plastic preforms via the mouth thereof, and wherein said application unit (14) includes at least one valve unit (140) for controlling the gaseous medium to be supplied to the plastic preform, and wherein the valve unit (140) has a working chamber (142) to which a gaseous medium can be applied, as well as an opening (146), via which the gaseous medium can be supplied from the working space (142) to the plastic preforms (10) and/or can be discharged therefrom, and wherein the valve unit (140) has a working piston (144), which is movable within said working chamber (142) between at least two positions (P1, P2), wherein in a first position (P2) of said working piston (144), the gaseous medium can flow via the opening (146), and wherein in a second position (P1) of the working piston (144) opposite the working chamber (142), a flow of the gaseous medium through the opening (146) is prevented, and wherein the valve unit (104) has a control piston (154) that is movable within a control chamber (154) between at least two positions, wherein a movement of the control piston (154) is coupled, at least at times, to a movement of the working piston (144), and wherein the control chamber (152) has an opening (168) for supplying and/or discharging a control medium,
**characterised in that**
the valve unit (140) includes a sealing unit (148) that substantially prevents a gas flow between the working chamber (142) and the control chamber (152) at least in one position of the working piston, and wherein the valve unit (140) further includes a membrane body (158) that seals at least one area (154a, 154b) of the control piston (154) against at least one area (152a, 152b) of the control chamber (152), wherein the sealing unit (148) is provided between the membrane body (158) and at least one section of the working piston (144).

2. The apparatus (1) as claimed in claim 1,
**characterised in that**
the membrane body (158) is provided in the control chamber (152).

3. The apparatus (1) as claimed in at least one of the preceding claims,
**characterised in that**
the membrane body (158) delimits the control chamber (152) and/or a control space (152a, 152b).

4. The apparatus (1) as claimed in at least one of the preceding claims,
**characterised in that**
the sealing unit (148) substantially prevents a gas flow between the working chamber (142) and the control chamber (152) in the first and/or the second position of the working piston (144).

5. The apparatus (1) as claimed in at least one of the preceding claims,
**characterised in that**
the working piston (144) can be placed in a third position (P3) in relation to the working chamber (142) and in this position, a media flow is enabled between the working chamber (142) and the control chamber (152).

6. The apparatus (1) as claimed in at least one of the preceding claims,
**characterised in that**
the valve unit (140) includes a supply opening for supplying a cleaning agent.

7. The apparatus (1) as claimed in at least one of the preceding claims,
**characterised in that**
the sealing unit (148) surrounds a section of the working piston (144) in the circumferential direction thereof.

8. The apparatus (1) as claimed in at least one of the preceding claims,
**characterised in that**
the membrane body (158) rests against the surface (154a) of the control piston (154).

9. The apparatus (1) as claimed in at least one of the preceding claims,
**characterised in that**
at least two, preferably at least three, valve units (140) are provided in or on a valve block (15) which is provided on a moulding station (8).

10. A pneumatically controlled valve unit (140) for controlling a media supply to a container, wherein the valve unit (140) has a working chamber (142), to which a flowable medium can be applied, as well as an opening (146), via which the flowable medium can be supplied from the working chamber (142) to the containers (10a), and wherein the valve unit (140) includes a working piston (144) that is movable within the working chamber (142) between at least two positions (P1, P2), wherein in a first position of the working piston (144) opposite the working chamber (142), the flowable medium can flow via the opening (146), and wherein in a second position of the working piston (144) opposite the working chamber, a flow of the flowable medium through the opening (146) is prevented, and wherein the valve unit (140) has a control piston (154) that is movable within a control chamber (152) between at least two positions, wherein a movement of the control piston (154) is coupled, at least at times, to a movement of the working piston (144), and wherein the control chamber (152) has an opening (168) for supplying and/or discharging a gaseous control medium,
**characterised in that**
the valve unit (140) includes a sealing unit (148) which in the first and second positions of the working chamber substantially prevents a gas flow between the working chamber (142) and the control chamber (152), and wherein the valve unit (140) further includes a membrane body (158) that seals at least one area (154a, 154b) of the control piston (154) against at least one area of the control chamber (152), wherein the sealing unit (148) is provided between the membrane body (158) and at least one section of the working piston (144), and wherein the membrane body (148) delimits a control space (152a) of the control chamber (152), to which the gaseous control medium is applied.

11. A method for moulding plastic preforms (10) into plastic containers, wherein the plastic preforms (10) are transported along a specified transport path and are moulded during this transport by applying a gaseous medium to the plastic containers, wherein a sterile gaseous medium is supplied to the plastic preforms (10) and wherein the supply of the gaseous medium is controlled by at least one valve unit (140), wherein said valve unit (140) is a valve unit (140) that is controlled by a further gaseous medium and includes a working space, to which the gaseous medium can be applied,
**characterised in that**
the further gaseous medium is a non-sterile medium, and that this further gaseous medium can be applied to a control space (152a) for moving a control piston (154), wherein said control space (152a) is delimited by a flexible membrane (158).

## Revendications

1. Dispositif (1) pour le moulage de préformes en matière plastique (10) en récipients en matière plastique avec au moins un dispositif de moulage (8) qui présente un dispositif de moulage par soufflage qui réalise une cavité, à l'intérieur de laquelle les préformes en matière plastique (10) peuvent être moulées par alimentation en un milieu gazeux pour former les récipients en matière plastique, dans lequel le dispositif de moulage (8) présente un dispositif d'alimentation (14) qui alimente les préformes en matière plastique par leur embouchure en un milieu gazeux et dans lequel ce dispositif d'alimentation (14) présente au moins un dispositif de soupape (140) pour la commande du milieu gazeux à amener à la préforme en matière plastique et dans lequel le dispositif de soupape (140) présente une chambre de travail (142) qui peut être alimentée en un milieu gazeux, ainsi qu'une ouverture (146), par laquelle le milieu gazeux peut être amené de l'espace de travail (142) aux préformes en matière plastique (10) et/ou évacué de celles-ci et dans lequel le dispositif de soupape (140) présente un piston de travail (144) qui est mobile dans cette chambre de travail (142) entre au moins deux positions (P1, P2), dans lequel, dans une première position (P2) de ce piston de travail (144), le milieu gazeux peut s'écouler par l'ouverture (146) et dans lequel, dans une seconde position (P1) du piston de travail (144) par rapport à la chambre de travail (142), un écoulement du milieu gazeux par l'ouverture (146) est empêché, et dans lequel le dispositif de soupape (140) présente un piston de commande (154) qui est mobile dans une chambre de commande (152) entre au moins deux positions, dans lequel un mouvement du piston de commande (154) est couplé au moins temporairement à un mouvement du piston de travail (144) et dans lequel la chambre de commande (152) présente une ouverture (168) pour l'amenée et/ou l'évacuation d'un milieu de commande,
**caractérisé en ce que**
le dispositif de soupape (140) présente un dispositif de colmatage (148) qui empêche sensiblement dans au moins une position du piston de travail un écoulement de gaz entre la chambre de travail (142) et la chambre de commande (152) et dans lequel le dispositif de soupape (140) présente en outre un corps de membrane (158) qui rend étanche au moins une zone (154a, 154b) du piston de commande (154) par rapport à au moins une zone (152a, 152b) de la chambre de commande (152), dans lequel le dispositif de colmatage (148) est agencé entre le corps de membrane (158) et au moins une section du piston de travail (144).

2. Dispositif (1) selon la revendication 1,
**caractérisé en ce que**
le corps de membrane (158) est agencé dans la chambre de commande (152).

3. Dispositif (1) selon au moins l'une quelconque des revendications précédentes,
**caractérisé en ce que**
le corps de membrane (158) délimite la chambre de commande (152) et/ou un espace de commande (152a, 152b).

4. Dispositif (1) selon au moins l'une quelconque des revendications précédentes,
**caractérisé en ce que**
le dispositif de colmatage (148) empêche sensiblement dans la première et/ou la seconde position du piston de travail (144) un écoulement de gaz entre la chambre de travail (142) et la chambre de commande (152).

5. Dispositif (1) selon au moins l'une quelconque des revendications précédentes,
**caractérisé en ce que**
le piston de travail (144) peut être amené dans une troisième position (P3) par rapport à la chambre de travail (142) et dans cette position, un écoulement de milieu est permis entre la chambre de travail (142) et la chambre de commande (152).

6. Dispositif (1) selon au moins l'une quelconque des revendications précédentes,
**caractérisé en ce que**
le dispositif de soupape (140) présente une ouverture d'amenée pour l'amenée d'un milieu de nettoyage.

7. Dispositif (1) selon au moins l'une quelconque des revendications précédentes,
**caractérisé en ce que**
le dispositif de colmatage (148) entoure une section du piston de travail (144) dans son sens périphérique.

8. Dispositif (1) selon au moins l'une quelconque des revendications précédentes,
**caractérisé en ce que**
le corps de membrane (158) repose contre une surface (154a) du piston de commande (154).

9. Dispositif (1) selon au moins l'une quelconque des revendications précédentes,
**caractérisé en ce que**
au moins deux, de préférence au moins trois dispositifs de soupape (140) sont agencés dans ou sur un bloc de soupape (15) qui est agencé sur un poste de moulage (8).

10. Dispositif de soupape (140) commandé par voie pneumatique pour la commande d'une amenée de milieu à un récipient, dans lequel le dispositif de soupape (140) présente une chambre de travail (142) qui peut être alimentée en un milieu fluide, ainsi qu'une ouverture (146), par laquelle le milieu fluide peut être amené de la chambre de travail (142) aux récipients (10a) et dans lequel le dispositif de soupape (140) présente un piston de travail (144) qui est mobile dans cette chambre de travail (142) entre au moins deux positions (P1, P2), dans lequel, dans une première position de ce piston de travail (144) par rapport à la chambre de travail (142), le milieu fluide peut s'écouler par l'ouverture (146) et dans lequel, dans une seconde position du piston de travail (144) par rapport à la chambre de travail, un écoulement du milieu fluide par l'ouverture (146) est empêché, et dans lequel le dispositif de soupape (140) présente un piston de commande (154) qui est mobile dans une chambre de commande (152) entre au moins deux positions, dans lequel un mouvement du piston de commande (154) est couplé au moins temporairement à un mouvement du piston de travail (144), et dans lequel la chambre de commande (152) présente une ouverture (168) pour l'amenée et/ou l'évacuation d'un milieu de commande gazeux,
**caractérisé en ce que**
le dispositif de soupape (140) présente un dispositif de colmatage (148) qui empêche sensiblement dans la première et seconde position du piston de travail un écoulement de gaz entre la chambre de travail (142) et la chambre de commande (152) et dans lequel le dispositif de soupape (140) présente en outre un corps de membrane (158) qui rend étanche au moins une zone (154a, 154b) du piston de commande (154) par rapport à au moins une zone de la chambre de commande (152), dans lequel le dispositif de colmatage (148) est agencé entre le corps de membrane (158) et au moins une section du piston de travail (144) et dans lequel le corps de membrane (158) délimite un espace de commande (152a) alimenté en milieu de commande gazeux de la chambre de commande (152).

11. Procédé de moulage de préformes en matière plastique (10) en récipients en matière plastique, dans lequel les préformes en matière plastique (10) sont transportées le long d'une voie de transport prescrite et pendant ce transport sont moulées par alimentation en un milieu gazeux pour former les récipients en matière plastique, dans lequel un milieu gazeux stérile est amené aux préformes en matière plastique (10) et dans lequel l'amenée du milieu gazeux est commandée par au moins un dispositif de soupape (140), dans lequel ce dispositif de soupape (140) est un dispositif de soupape (140) commandé par un autre milieu gazeux et présente un espace de travail pouvant être alimenté en ce milieu gazeux,
**caractérisé en ce que**
l'autre milieu gazeux est un milieu non stérile et un espace de commande (152a) est alimenté en cet autre milieu gazeux pour le déplacement d'un piston de commande (154), dans lequel cet espace de commande (152a) est délimité par une membrane flexible (158).
